# FASCICULE DE BREVET EUROPEEN

(11) **EP 0 274 316 B1**
(45) Date de publication et mention de la délivrance du brevet: **24.02.1993**
(21) Numéro de dépôt: 87402846.7
(22) Date de dépôt: 27.11.1987
(51) Int. Cl.: B29C 49/78, B29C 49/46

(54) **Procédé de fabrication par soufflage de pièces creuses en matière synthétique, notamment récipients à liquides et en particulier à boissons gazeuses**
Verfahren zum Herstellen von hohlen Gegenständen aus synthetischem Material durch Blasformen,hauptsächlich Behälter für Flüssigkeiten und insbesondere für kohlensäurehaltige Getränke
Method of blow-moulding hollow articles of a synthetic material, especially containers for liquids and in particular for carbonated beverages

(30) Priorité: 02.12.1986 FR 8616834
(43) Date de publication de la demande: 13.07.1988
(73) Titulaire: SOLOMAT PARTNERS L.P., Stamford, CT 06906 (US)
(72) Inventeur: Ibar, Jean-Pierre, F-Ballainvilliers (Essone) (FR)
(74) Mandataire: W.P. THOMPSON & CO.

(56) Documents cités:
- DE-A- 1 919 206
- DE-A- 1 960 129
- FR-A- 1 600 585
- FR-A- 2 264 646
- US-A- 3 888 961
- US-A- 4 435 453

## Description

L'invention concerne un procédé de fabrication de pièces creuses en matière synthétique, notamment de récipients à liquides et, en particulier, à boisson gazeuse.

Il est connu de fabriquer des pièces creuses en matière synthétique en soufflant ces pièces dans un moule pour leur donner la forme voulue.

Ce procédé de fabrication connu s'inspire des procédés de fabrication de bouteilles et de flacons en verre.

Le brevet US-A-3 888 961 (SCHONEWALD) porte en particulier sur le refroidissement de la pièce dans le moule. Selon ce procédé connu on remplace plusieurs fois le fluide à l'intérieur du produit en diminuant et en augmentant de manière répétée la pression de ce fluide. Il n'y a donc pas de double évolution de la pression suivant des programmes déterminés : ni une évolution de la pression de base, ni une évolution de la pression complémentaire induite par la fréquence à laquelle on fait vibrer le fluide.

On connaît également DE-A-1 960 129 (SIDEL) qui concerne un procédé permettant de nettoyer l'intérieur de pièces creuses et d'en évacuer les corps étrangers. Pour cela il est prévu d'interrompre le soufflage et de relier l'intérieur de la pièce creuse à l'atmosphère de façon que l'air emprisonné entre la matière plastique et la paroi du mou le puisse trouver son chemin vers les trous d'évents. Il en résulte comme l'indique ce brevet un refroidissement plus efficace de la pièce avec les phases de soufflage.

Le nettoyage proprement dit de l'intérieur de la pièce, but principal de cette invention antérieure, consiste à faire passer l'air froid à grande vitesse sur la partie de la pièce creuse qui est difficile à refroidir. Des remarques semblables à celles faites à propos du brevet américain analysé ci-dessus s'appliquent à ce cas. Le fait de faire varier à plusieurs reprises la pression de l'air à l'intérieur de la pièce moulée ne revient pas à modifier la pression et la fréquence du gaz de soufflage pour modifier les caractéristiques de la matière constitutive de la pièce.

On connaît en outre DE-A-1 919 206 (ENZIGER) qui concerne un procédé pour fabriquer des bouteilles en matière synthétique et les remplir en ne laissant subsister que très peu d'air. Le soufflage se fait avec du gaz carbonique comprimé.

Le conditionnement de produits notamment de liquides gazeux (boissons gazeuses) fait appel de plus en plus à des emballages ou conditionnements en matière plastique.

La présente invention se propose de créer un procédé de fabrication de pièces creuses, notamment de récipients, permettant d'améliorer les caractéristiques des récipients ainsi fabriqués.

A cet effet, l'invention concerne un procédé de fabrication du type ci-dessus, caractérisé en ce qu'on soumet la pression du gaz de soufflage à une double évolution provenant d'une pression de base à laquelle s'ajoute une variation de pression, selon un programme de fréquence prédéterminé en fonction de la variation de température du moule.

Ces deux paramètres varient indépendamment. Ce procédé a pour but de modifier les caractéristiques de la matière constitutive de la pièce fabriquée et non pas de refroidir celle-ci plus ou moins rapidement.

Suivant une autre caractéristique de l'invention, on souffle la pièce avec un gaz polaire, de préférence très peu soluble ou insoluble dans les liquides destinés à être contenus dans les objets soufflés.

Suivant une autre caractéristique de l'invention, le gaz polaire est du gaz carbonique.

Ainsi selon l'invention, il y a une double évolution programmée de la pression. La pression de base est celle du fluide remplissant la cavité de la pièce en cours de moulage. Cette pression peut rester constante ou évoluer dans le temps suivant un programme déterminé. A cette pression de base s'ajoutent les variations de pression induites par la mise en vibration du fluide de soufflage suivant la fréquence programmée.

Ainsi, grâce au soufflage de la pièce suivant une fréquence et une pression variables, selon un programme de pression et de fréquence prédéterminé, on peut donner, à la matière constitutive de la pièce, des propriétés et caractéristiques qu'elle ne pouvait avoir par le simple procédé de soufflage. Il s'agit notamment de caractéristiques thermiques, mécaniques ou électriques

En particulier, si le soufflage se fait avec du gaz carbonique, on introduit du gaz carbonique dans la matière plastique du récipient de manière à augmenter la concentration de ce gaz dans la paroi et à constituer une barrière s'opposant à la diffusion du gaz carbonique. Cela est particulièrement intéressant pour des récipients déstinés à contenir des liquides gazeux et, notamment, des boissons gazeuses, car cela augmente la durée de stockage de ces produits ainsi conditionnés.

Suivant l'invention, on fait varier la pression dans le moule suivant un programme prédéterminé pendant le soufflage de la pièce et après celui-ci, jusqu'à l'extraction de la pièce du moule. Ce programme est notamment prédéterminé en fonction de la variation de température du moule.

## Revendications

1. Procédé de fabrication de pièces creuses telles que des récipients, des conteneurs, etc. en matière synthétique, par soufflage de la pièce, notamment dans un moule, procédé caractérisé en ce qu'on soumet la pression du gaz de soufflage à une double évolution provenant d'une pression de base à laquelle s'ajoute une variation de pression, selon un programme de fréquence prédéterminé en fonction de la variation de température du moule.

2. Procédé selon la revendication 1, caractérisé en ce qu'on souffle la pièce avec un gaz polaire.

3. Procédé selon la revendication 1, caractérisé en ce que le gaz polaire est du gaz carbonique.

## Claims

1. Method of manufacturing hollow items such as receptacles, containers, etc, made of synthetic material by blow-moulding the item, in particular in a mould, a method characterised in that the pressure of the blow-moulding gas is subjected to a double variation originating from a basic pressure to which is added a variation in pressure in accordance with a frequency programme predetermined as a function of the variation in temperature of the mould.

2. Method according to Claim 1, characterised in that the item is blow-moulded with a polar gas.

3. Method according to Claim 1, characterised in that the polar gas is carbon dioxide.

## Patentansprüche

1. Verfahren zur Herstellung von Hohlkörpern, wie Behältern, Gefässen u.dgl. aus Kunststoffmaterial im Rahmen eines vorzugsweise innerhalb einer Form durchgeführten Aufblasvorganges des jeweiligen Werkstoffes, dadurch gekennzeichnet, dass der Druck des zum Blasvorgang verwendeten Gases einer doppelten Veränderung ausgesetzt wird, indem dem Ausgangsdruck des Gases ein veränderlicher Druck hinzugefügt wird, welcher entsprechend einem vorgegebenen Frequenzprogramm eine Abhängigkeit entsprechend der Veränderung der Temperatur der verwendeten Form aufweist.

2. Verfahren nach Anspruch 1, dadurch gekennzeichnet, dass der Aufblasvorgang des Werkstoffes mit einem polaren Gas durchgeführt wird.

3. Verfahren nach Anspruch 1, dadurch gekennzeichnet, dass das polare Gas Kohlendioxyd ist.
